# EUROPEAN PATENT SPECIFICATION

(11) **EP 2 188 214 B1**
(45) Date of publication and mention of the grant of the patent: **03.10.2012**
(21) Application number: 08787226.3
(22) Date of filing: 14.08.2008
(51) Int. Cl.: C01B 33/141, C09C 1/30, A01N 59/00

(54) **SILICA DISPERSION**
KIESELERDEDISPERSION
DISPERSION DE SILICE

(30) Priority: 06.09.2007 DE 102007042417
(43) Date of publication of application: 26.05.2010
(73) Proprietor: Evonik Degussa GmbH, 45128 Essen (DE)
(72) Inventor: SCHEFFLER, Jochen, 63755 Alzenau (DE); KAKAS, Margit, 63791 Karlstein (DE); PERLET, Gabriele, 63538 Grosskrotzenburg (DE); LORTZ, Wolfgang, 63607 Wächtersbach (DE)
(86) International application number: PCT/EP2008/060692
(87) International publication number: WO 2009/030588

(56) References cited:
- DE-A1-102004 021 532
- US-A1- 2002 110 574

## Description

The invention relates to a silica dispersion, a process for production thereof and also use thereof.

Pulverulent hydrophobic silica is used for controlling sucking insects, wherein the application proceeds by means of dusting (DE 3 835 592).

Disadvantageously, dust development is such that this method of insect control finds little acceptance.

The aqueous dispersions which are likewise described in DE 3835592, which consist of a hydrophobic silica and water, do not exhibit sufficient stability.

US 5830512 describes a dispersion in which sufficient stability is achieved by adding hydrophilic substances, such as, for example, silicas. However, by this means the active hydrophobic component is diluted by a hydrophilic substance. In addition, only a very low stability of the dispersion from hours to a few days is achieved.

EP 1 250 048 discloses stabilizing the dispersion of hydrophobic silica by gelling additives, such as xanthan gum, sodium alginates or neutralized carboxyvinyl polymers, wherein mixtures of these additives are also possible.

These gelling additives, in combination with the hydrophobic SiO₂ particles and the air incorporated effect a marked structural viscosity.

A pronounced structural viscosity is also exhibited in the case of application by spraying: during the spraying process, the viscosity of the dispersion at the shear forces which occur is relatively low. After the dispersion drops impact the surface to be coated, the viscosity increases again greatly, in order to avoid dripping/running off from, in particular, vertical surfaces.

According to EP 1 250 048, in addition to the hydrophobic SiO₂ particles to be dispersed, large amounts of air are incorporated. Using the known dispersion processes, this cannot be avoided without the use of wetting surfactants and defoamers. For instance, in Example 1, a density of only 0.6 g/ml is stated, that is to say that approximately 40% of the volume comprises air.

In order to achieve sufficient activity, a minimum mass must be applied to the surfaces to be sprayed. If, per spraying operation, only approximately 60% of the volume of the spraying appliances can be utilized, this means a significant reduction in efficacy.

Disadvantageously, the transport, packaging and disposal costs of the required packaging are higher by this fraction.

Also, during storage, a storage space approximately 40% larger must be taken into account.

In addition, using an air-containing dispersion, it is not possible to achieve a homogeneous, bubble-free coating of surfaces which are to be treated.

DE 10 2004 021 532 discloses a dispersion which, in addition to water, contains 0.5 to 20% by weight hydrophobic silica, 0.01 to 10% by weight of a gelling additive, or viscosity-increasing additive, 0.1 to 1% by weight of a preservative, 0 to 1% by weight of a surface-active substance.

This dispersion can be used as insecticide against mites and other insects.

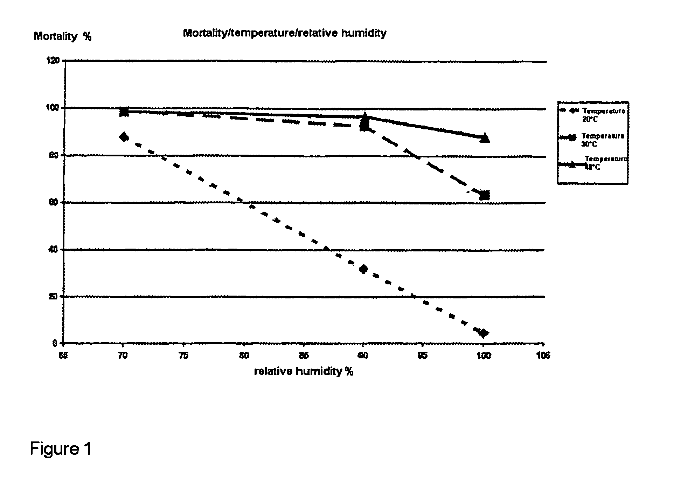

The known dispersion has the disadvantage that it loses activity at high atmospheric humidity, because the mites cannot then be dried out to the required extent. This fact is shown graphically in Figure 1.

The object was therefore to modify the silica dispersion such that activity of the dispersion is provided even at high atmospheric humidity.

The invention relates to a dispersion containing, in addition to water, 0.5 to 20% by weight of hydrophobic silica, 0.01 to 10% by weight of a gelling additive, or viscosity-increasing additive, which dispersion is characterized in that, as further components, it contains at least 0.1 to 5% by weight of p-chloro-m-cresol and/or at least 0.1 to 5% by weight of glutardialdehyde.

The content of p-chloro-m-cresol in the dispersion can preferably be 0.1 to 0.5% by weight.

The content of glutardialdehyde in the dispersion can preferably be 0.5 to 3% by weight.

The fraction of water can be 68 to 99.4% by weight.

The specific density of the dispersion can be greater than 0.6 g/ml, preferably 0.7 to 1.02 g/ml.

As hydrophobic silica, use can be made of a pyrogenically produced, hydrophobized silica. It can have a BET surface area of 20 to 600 m²/g.

In a preferred embodiment of the invention, as hydrophobic silica, use can be made of a pyrogenically produced silica which has been hydrophobized using hexamethyldisilazane (HMDS). It can have a BET surface area of 220 ± 25 m²/g and a carbon content of 3.0 to 4.0% by weight.

The gelling additive or viscosity-increasing additive can be a biopolymer, such as, for example, xanthan gum, sodium alginate, carob bean meal, pectin, agar, carrageenans, alginates and/or neutralized carboxyvinyl polymers, or mixtures of these substances.

The dispersion according to the invention can contain, in addition, preservatives.

As preservatives, use can be made of preservatives which are approved for foods. These can be:

sorbic acid, sodium sorbate, potassium sorbate, calcium sorbate, benzoic acid, sodium benzoate, potassium benzoate, calcium benzoate, PHB ethyl ester, PHB ethyl ester sodium salt, PHB propyl ester, PHB propyl ester sodium salt, PHB methyl ester, PHB methyl ester sodium salt, sulphur dioxide, sodium sulphite, sodium hydrogensulphite, sodium disulphite, potassium disulphite, calcium disulphite, calcium hydrogensulphite, biphenyl, orthophenylphenol, sodium orthophenylphenolate, thiabendazole, nisin, natamycin, formic acid, sodium formate, calcium formate, hexamethylenetetramine, dimethyl dicarbonate, propionic acid, sodium propionate, calcium propionate, potassium propionate.

In addition the following are approved:

nitrates, nitrites, carbon dioxide, chlorine and chlorine dioxide.

The preservatives can be present in an amount of up to 0.1% by weight.

The dispersion according to the invention can additionally contain surface-active substances in an amount of up to 1% by weight.

As surface-active substances, use can be made of ionic, nonionic and anionic surfactants.

The invention further relates to a process for producing the dispersion according to the invention which is characterized in that the individual components are dispersed successively or together in water, in which case the individual components are deaerated before and/or during the addition, or the dispersion is deaerated during the individual dispersion steps and residual dispersed air which is still present is finally removed by further mixing under vacuum.

In one embodiment of the invention, the deaeration can be carried out by means of application of vacuum.

Surprisingly, according to the invention, a stable and active dispersion can be achieved which does not contain extensive amounts of air. This deaerated dispersion can be achieved by the dispersion of previously deaerated hydrophobic SiO₂. Although subsequent deaeration of the dispersions is technically possible, it can only be achieved with great effort owing to the increased viscosity of the homogeneous phase water (gelling agent as additive). At least a part as large as possible of the air which can be dispersed can be removed by deaeration measures before or during the dispersion.

In principle, any dispersion process is suitable that either makes possible prior deaeration of the powder to be dispersed or prevents air being dispersed during the dispersion.

One embodiment of the deaeration and dispersion is the utilization of a vacuum dissolver. In this case water and the gelling additive can be briefly predispersed, then the entire amount of hydrophobic SiO₂ added without stirring to the surface of the solution, the mixture evacuated and only then dispersion of the hydrophobic SiO₂ started.

A PSI Mix^{®} from NETZSCH can also achieve this deaeration of the powder.

In order to remove residual microbubbles, use can be made of deaeration units such as the DA-VS NETZSCH vacuum deaerator from NETZSCH, a vacuum-thin-film rotary process.

Use can be made of the dispersion according to the invention as insecticides, for example against

| | |
|---|---|
| house dust mite: | Dermatophagoides pteronyssinus |
| red poultry mite: | Dermanyssus gallinae |
| red flour beetle: | Tribolium castaneum |
| granary weevil: | Sitophilus granarius |
| Indian meal moth: | Plodia interpunctella |
| green aphid: | Schizaphis graminum. |

The invention relates to the synergistic action of the known dispersion with further biocidal additives for extending the activity spectrum into the "disinfecting range" also.

The dispersion according to DE 102004021532 is suitable, in particular, for controlling the red poultry mite in poultry rearing for egg production. The activity of the dispersion is restricted essentially to adult mites owing to the more physical mechanism of activity ("defatting/dewaxing" of the mite surface followed by a fatal course of water loss due to drying out). The mite eggs in particular do not appear to be damaged by this "non-chemical attack".

Occurrence of salmonellae has increasingly been observed in recent years in poultry housing. In Germany, in the interim, every third enterprise has been affected. In this case there is a correlation between salmonellae infection, enterprise size and type of housing: relatively large farms having more than 3000 laying hens and animals in cages are significantly more frequently affected than smaller enterprises and those having floor, aviary or open air husbandry. For reduction of these pathogenic agents which can also be dangerous to humans (salmonellosis outbreaks mostly occur after consumption or processing of poultry products), the poultry houses are thoroughly cleaned before new occupation with young chickens and increasingly also treated with disinfectants. After such a disinfection, however, further subsequent treatment for killing the poultry mites is necessary, since these are not covered by the customary disinfectants.

It is possible by means of the dispersion according to the invention to carry out these two cleaning processes successfully in one operating procedure. Surprisingly, it has now been found that some active compound combinations can even kill the mite eggs by a synergistic effect. This synergistic action has been tested on the following formulas.

### Examples

In all examples use was made of a DISPERMAT^{®} laboratory dissolver from VMA-GETZMANN GMBH having the CDS vacuum system. The CDS dispersion system permits dispersion processes to be carried out in vessels in a completely closed system under vacuum. A toothed disk of 70 mm diameter was used.

The silica used is the pyrogenically produced, hexamethyldisilazane-hydrophobized (HMDS) silica AEROSIL^{®} 812S.

This silica is based on the pyrogenically produced silica AEROSIL^{®} 300. It has a BET surface area of 220 ± 25 m²/g and a carbon content of 3.0 to 4.0% by weight.

### Production of the known dispersion

To 475.5 g of deionized water are added 1 g of lecithin, 0.5 g of sorbic acid, 0.5 g of potassium sorbate and 7.5 g of Satiaxane xanthan gum and dispersion is carried out for 15 min at 1000 rpm under vacuum on the dissolver. Then, 15 g of Aerosil R 812 S are charged and the dispersion is deaerated for 10 min under vacuum without stirring. Finally, the Aerosil R 812 S is dispersed under vacuum at 2000 rpm.

### R 1 production

To 466.5 g of deionized water are added 1 g of lecithin and 7.5 g of Satiaxane xanthan gum and dispersion is carried out for 15 min at 1000 rpm under vacuum on the dissolver. Then, 10 g of glutardialdehyde and 15 g of Aerosil R 812 S are charged and the mixture is deaerated for 10 min under vacuum without stirring. Finally, the Aerosil R 812 S is dispersed at 2000 rpm under vacuum.

### R 2 production

To 436.5 g of deionized water are added 1 g of lecithin and 7.5 g of Satiaxane xanthan gum and dispersion is carried out for 15 min at 1000 rpm under vacuum on the dissolver. Then, 40 g of glutardialdehyde and 15 g of Aerosil R 812 S are charged and the mixture is deaerated for 10 min under vacuum without stirring. Finally, the Aerosil R 812 S is dispersed at 2000 rpm under vacuum.

### R 3 production

At 70°C, 0.5 g of p-chloro-m-cresol is stirred into 476.5 g of deionized water (cresol melts at approximately 60°C) at 500 rpm. Thereafter, 1 g of lecithin and 7.5 g of Satiaxane xanthan gum are added and the mixture is dispersed for 15 min at 1000 rpm under vacuum on the dissolver. Then, 15 g of Aerosil R 812 S are charged and the mixture is deaerated for 10 min under vacuum without stirring. Finally, the Aerosil R 812 S is dispersed at 2000 rpm under vacuum.

### R 4 production

At 70°C, 1.75 g of p-chloro-m-cresol are stirred into 474.75 g of deionized water (cresol melts at approximately 60°C) at 500 rpm. Thereafter, 1 g of lecithin and 7.5 g of Satiaxane xanthan gum are added and the mixture is dispersed for 15 min at 1000 rpm under vacuum on the dissolver. Then, 15 g of Aerosil R 812 S are charged and the dispersion is deaerated for 10 min under vacuum without stirring. Finally, the Aerosil R 812 S is dispersed at 2000 rpm under vacuum.

### R 5 production

At 70°C, 0.5 g of p-chloro-m-cresol is stirred into 466 g of deionized water (cresol melts at approximately 60°C) at 500 rpm. Thereafter, 1 g of lecithin and 7.5 g of Satiaxane xanthan gum are added and the mixture is dispersed for 15 min at 1000 rpm under vacuum on the dissolver. Then, 40 g of glutardialdehyde and 15 g of Aerosil R 812 S are charged and the mixture is deaerated for 10 min under vacuum without stirring. Finally, the Aerosil R 812 S is dispersed at 2000 rpm under vacuum.

Dispersions R 10, R 14 and R 13 were produced in a similar manner to R 5.

| Formula | Biocide | Concentration |
|---|---|---|
| R 1 | glutardialdehyde | 0.5% |
| R 2 | glutardialdehyde | 2.0% |
| R 3 | p-chloro-m-cresol | 0.1% |
| R 4 | p-chloro-m-cresol | 0.35% |
| R 5 (combination of R 1 + R 3) | glutardialdehyde + p-chloro-m-cresol | 0.5% + 0.1% |
| R 10 | glutardialdehyde + p-chloro-m-cresol | 0.5% + 0.35% |
| R 14 | glutardialdehyde + p-chloro-m-cresol | 1.0% + 0.2% |
| R 13 | glutardialdehyde + p-chloro-m-cresol | 2.0% + 0.35% |

### Determination of activity against adult mites:

For determination of the effect (mortality) on fully grown mites which are full by sucking, in each case approximately 100 mites are placed onto a dried active compound coating (wet film thickness 200 µm) on a galvanized steel plate in a plastic Petri dish which, after being closed with a fine fabric/gauze, is stored in a climatically controlled chamber (23°C and varying relative humidity) and after, for example, 24 h, the live, damaged or dead mites are enumerated. The test is performed at 50% and 100% relative humidity.

### Result:

All formulas after 24 h and 50% relative humidity show a mortality of 95-100%, that is to say excellent activity. (See Figure 1).

However, it was surprising that the products R 1 to R 5, in contrast to the known dispersion, also showed outstanding effect (98-100%) at 100% relative humidity.

The results are very good, that is to say with all formulations the mortality is in the range between 98% and 100% (see Table 1).

**Table 1: Mortality of adult mites**

| Formula | Addition of glutardi-aldehyde | Addition of p-chloro-m-cresol | Mortality of adults [%] 44-50% RH | Mortality of adults [%] 100% RH |
|---|---|---|---|---|
| R 1 | 0.5% | - | 98 | 98 |
| R 2 | 2.0% | - | 100 | 100 |
| R 12 | 2.0% | - | 100 | 100 |
| R 3 | - | 0.10% | 97 | 99 |
| R 4 | - | 0.35% | 98 | 100 |
| R 5 | 0.5% | 0.10% | 100 | 99 |
| R 10 | 0.5% | 0.35% | 100 | 100 |
| R 14 | 1.0% | 0.20% | 100 | 100 |
| R 13 | 2.0% | 0.35% | 100 | 100 |

### Determination of activity against mite eggs:

For determination of the activity (mortality) on mite eggs, in each case approximately 100 mite eggs are placed onto a freshly spread active compound coating (wet film thickness 200 µm) on a galvanized steel plate in a plastic Petri dish, stored in a climatically controlled chamber and after, for example 24 h, the mite eggs are evaluated or the hatched larvae are enumerated.

| Formula | Biocide | Concentration | Effect on adults | Effect on eggs |
|---|---|---|---|---|
| R 1 | glutardialdehyde | 0.5% | +++ | + |
| R 2 | glutardialdehyde | 2.0% | +++ | + |
| R 3 | chlorocresol | 0.1% | +++ | ++ |
| R 4 | chlorocresol | 0.35% | +++ | +++ |
| R 5 | glutardialdehyde + chlorocresol | 0.5% + 0.1% | +++ | ++ |

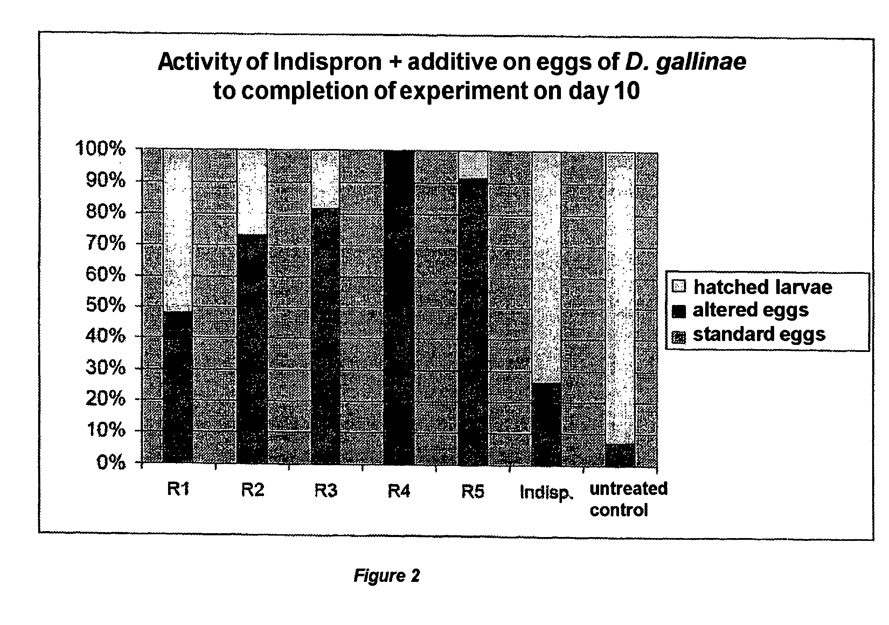

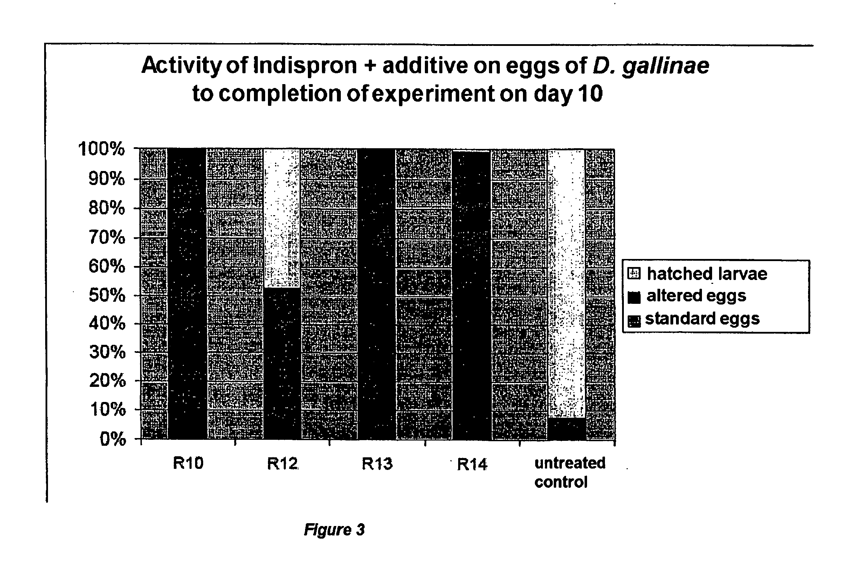

These results are shown graphically in Figures 2 + 3 and also in Table 2.

**Table 2: Activity against mite eggs**

| Formula | Addition of glutardi-aldehyde | Addition of p-chloro-m-cresol | Fraction of damaged eggs [%] |
|---|---|---|---|
| R 1 | 0.5% | - | 49 |
| R 2 | 2.0% | - | 73 |
| R 12 | 2.0% | - | 53 |
| R 3 | - | 0.10% | 82 |
| R 4 | - | 0.35% | 100 |
| R 5 | 0.5% | 0.10% | 91 |
| R 10 | 0.5% | 0.35% | 100 |
| R 14 | 1.0% | 0.20% | 98 |
| R 13 | 2.0% | 0.35% | 100 |

Determination of the activities against salmonellae:

On the basis of the DVG guidelines (Guidelines of the German Veterinary Society), a modified "quantitative suspension test" with and without protein loading is carried out with respect to approval/uptake into the DVG list column 4b ("preventive disinfection"). A modification of the test method is necessary, since the dispersion according to the invention is a disinfectant solution, but has a particular consistency (viscosity).

Summary of the results of microbiological experiments with Salmonella enteritidis:

| Formula | Biocide | Concentration | Bacteriostasis (48 h) | Suspension test (without EW) | Suspension test (with EW) |
|---|---|---|---|---|---|
| R 1 | glutardialdehyde | 0.5% | - | ++ | + |
| R 2 | glutardialdehyde | 2.0% | ++ | +++ | +++ |
| R 3 | p-chloro-m-cresol | 0.1% | - | - | - |
| R 4 | p-chloro-m-cresol | 0.35% | ++ | - | - |
| R 5 | glutardialdehyde + p-chloro-m-cresol | 0.5% + 0.1% | + | ++ | ++ |

A combination of R 2 and R4 with 2% glutardialdehyde + 0.35% p-chloro-m-cresol is particularly advantageous.

In this case
- the hydrophobic, pyrogenically produced SiO₂ of the dispersion according to the invention is responsible for killing the mites,
- the p-chloro-m-cresol is responsible for the damage/killing of the mite eggs
- and the glutardialdehyde is responsible for killing the salmonellae.

### Test of the dispersion R 13 according to the invention on the basis of the DVG guideline as condition for uptake into the "disinfectant list of the German Veterinary Society (DVG) for animal husbandry"

The testing of the disinfectants which are to be taken up into the "disinfectant list of the German Veterinary Society (DVG) for animal husbandry" must be carried out according to the "Guidelines for testing chemical disinfectants" of the German Veterinary Society e.V. (DVG) which contain the "Methods for testing disinfectants for animal husbandry".

Since the dispersion R 13 according to the invention - in contrast to a known disinfectant concentrate - is an emulsion and is also applied in undiluted form in the animal house, the DVG method was modified in such a manner that an opinion and a listing is possible.

### Test organisms:

In accordance with the DVG guideline, the testing was performed using the following test organisms:

| | |
|---|---|
| Staphylococcus aureus | DSM 799 |
| Enterococcus faecium | DSM 2918 |
| Proteus mirabilis | DSM 788 |
| Pseudomonas aeruginosa | DSM 939 |
| Candida albicans | DSM 1386 |

In addition, the activity on salmonellae of the dispersion R 13 according to the invention was tested. In this case the following test microorganism was used:
Salmonella enterica subsp. enterica DSM 10062 (= S. senftenberg)

### Dilutions of the disinfectant:

The dilutions of the disinfectant were made up with sterilized water of standardized hardness (WSH) immediately before the test. The dispersion R 13 according to the invention is only miscible with WSH up to a ratio of 20% w/v, so that higher concentrations were not tested.

### Determination of the bacteriostatic action in the dilution test:

The bacteriostatic action in the dilution test was determined in accordance with the DVG Guidelines IV.A.2.

In sterilized test tubes, step dilutions of the dispersion R 13 according to the invention with concentrated casein peptone-soybean meal peptone solution were produced, inoculated with a defined number of test microorganisms and subsequently incubated. As an index of the bacteriostatic action, the highest disinfectant dilution was determined which still suppresses bacterial growth (minimal inhibitory concentration = MIC). On account of the inherent haze of the dispersion R 13 according to the invention, as a deviation from the DVG guideline, quantification of the test organisms used was carried out in the surface process (before and after testing), in order to be able to determine the bacteriostatic disinfectant concentration. A phenol dilution series was run in conjunction for control and for comparison.

The minimal inhibitory concentration (MIC) determined of the dispersion R 13 according to the invention is between 7.5% (for Salmonella enterica ssp. enterica and Proteus mirabilis) and 15% (for Enterococcus faecium).

### Determination of the bactericidal action in the suspension test (end point method)

The bactericidal action of the dispersion R 13 according to the invention was determined in accordance with the DVG Guidelines IV.A.3 in the suspension test without and with protein loading.

In this case microorganism suspension was added to the disinfectant dilution to be tested and after defined exposure times in each case a sample was taken and superinoculated. The test proceeded not only without protein loading but also with a protein loading of 20% bovine serum.

For control, not only a growth control without disinfectant but also a sensitivity control with phenol solution was carried out in conjunction.

Without protein loading, the dispersion R 13 according to the invention acted in the course of 30 minutes on all bacterial test microorganisms in a concentration of 4% and therefore below the established MIC.

In the test with protein loading, there was an impairment in activity which, however, was scarcely noticeable after 30 minutes. All bacterial test microorganisms, in the suspension test with protein loading, were killed in the course of 30 min by a concentration of 6%.

Salmonella enterica, not only in the test without protein loading but also with protein loading was killed by a concentration of 6% in the course of 15 minutes, or a concentration of 10% in the course of 5 minutes. Since the product is used undiluted in the animal house, a still stronger activity can be assumed in practical use.

### Determination of the bactericidal action in the germ carrier test:

The bactericidal action of the dispersion R 13 according to the invention in the germ carrier test was determined according to the method specified in the DVG guidelines under IV.A.4. In this case, not only product dilutions (10% and 20%) but also undiluted product was tested. It was found that the dispersion R 13 according to the invention, owing to its rheological properties, cannot penetrate into the germ carrier linden wood in sufficient active compound concentration so that here no activity sufficient according to the method was detectable.

### Summary evaluation:

The dispersion R 13 according to the invention is readily active in the suspension test with and without protein loading, and only in the case of short-time exposure has a marked protein defect. The limiting factor is the determination of the MIC in the bacteriostasis test. On account of the previous results, the use of the dispersion R 13 according to the invention is possible for preventive disinfection in the animal husbandry sector. It must be noted that the product (contrary to the present test) is employed undiluted in the animal house and therefore the action on site may be still higher than can be declared according to the method.

In contrast, the dispersion R 13 according to the invention is unsuitable for special disinfection, since the penetration capacity into linden wood which is required for this cannot be ensured.

## Claims

1. Dispersion containing, in addition to water, 0.5 to 20% by weight of hydrophobic silica, 0.01 to 10% by weight of a gelling additive, or viscosity-increasing additive, **characterized in that**, as further components, it contains at least 0.1 to 5% by weight of p-chloro-m-cresol and/or at least 0.1 to 5% by weight of glutardialdehyde.

2. Process for producing the dispersion according to Claim 1, **characterized in that** the individual components are dispersed successively or together in water, in which case the individual components are deaerated before and/or during the addition, or the dispersion is deaerated during the individual dispersion steps and residual dispersed air which is still present is finally removed by further mixing under vacuum.

3. Process for controlling insects and/or pathogenic agents, **characterized in that** use is made of a dispersion according to Claim 1.

## Patentansprüche

1. Dispersion, enthaltend neben Wasser 0,5 bis 20 Gew.-% hydrophobe Kieselsäure, 0,01 bis 10 Gew.-% eines gelierenden bzw. die Viskosität erhöhenden Additivs, **dadurch gekennzeichnet, dass** sie als weitere Komponenten mindestens 0,1 bis 5 Gew.-% p-Chlor-m-kresol und/oder mindestens 0,1 bis 5 Gew.-% Glutaraldehyd enthält.

2. Verfahren zur Herstellung der Dispersion gemäß Anspruch 1, **dadurch gekennzeichnet, dass** man die einzelnen Komponenten nacheinander oder gemeinsam in Wasser eindispergiert, dabei die einzelnen Komponenten vor und/oder während der Zugabe entlüftet oder die Dispersion während der einzelnen Dispergierschritte entlüftet und restliche noch vorhandene eindispergierte Luft abschließend durch weiteres Durchmischen unter Vakuum entfernt.

3. Verfahren zum Bekämpfen von Insekten und/oder Krankheitserregern, **dadurch gekennzeichnet, dass** man eine Dispersion gemäß Anspruch 1 einsetzt.

## Revendications

1. Dispersion contenant, outre l'eau, 0,5 à 20 % en poids de silice hydrophobe, 0,01 à 10 % en poids d'un additif gélifiant, ou d'additif viscosifiant, **caractérisée en ce qu'**en tant qu'autre composants, elle contient au moins 0,1 à 5 % en poids de p-chloro-m-crésol et/ou au moins 0,1 à 5 % en poids de glutardialdéhyde.

2. Procédé de production de la dispersion selon la revendication 1, **caractérisé en ce que** les composants individuels sont dispersés successivement ou conjointement dans de l'eau, auquel cas les composants individuels sont désaérés avant et/ou pendant l'addition, ou la dispersion est désaérée pendant les étapes de dispersion individuelles et l'air dispersé résiduel qui est toujours présent est enfin éliminé en mélangeant de nouveau sous vide.

3. Procédé de lutte contre les insectes et/ou les agents pathogènes, **caractérisé en ce qu'**on utilise une dispersion selon la revendication 1.
